# EUROPEAN PATENT SPECIFICATION

(11) **EP 4 529 146 B1**
(45) Date of publication and mention of the grant of the patent: **04.03.2026**
(21) Application number: 23919434.3
(22) Date of filing: 17.11.2023
(51) Int. Cl.: H04M 1/02, G06F 1/16

(54) **FOLDING ASSEMBLY AND ELECTRONIC DEVICE**
FALTANORDNUNG UND ELEKTRONISCHE VORRICHTUNG
ENSEMBLE DE PLIAGE ET DISPOSITIF ÉLECTRONIQUE

(30) Priority: 01.02.2023 CN 202310130418
(43) Date of publication of application: 26.03.2025
(73) Proprietor: Honor Device Co., Ltd., Shenzhen, Guangdong 518040 (CN)
(72) Inventor: DONG, Shaohong, Shenzhen, Guangdong 518040 (CN); CHEN, Ruihao, Shenzhen, Guangdong 518040 (CN); PENG, Gaofeng, Shenzhen, Guangdong 518040 (CN); DAN, Jinqi, Shenzhen, Guangdong 518040 (CN); HUANG, Jian, Shenzhen, Guangdong 518040 (CN)
(74) Representative: Goddar, Heinz J.
(86) International application number: PCT/CN2023/132371
(87) International publication number: WO 2024/159870

(56) References cited:
- EP-A1- 4 072 110
- EP-A2- 2 546 721
- CN-A- 109 669 513
- CN-A- 114 285 924
- CN-U- 205 596 165
- CN-U- 208 079 161
- CN-U- 217 428 168
- KR-A- 20230 006 320
- US-A1- 2021 274 665

## Description

### TECHNICAL FIELD

This application relates to the field of electronic device technologies, and in particular, to a foldable assembly and an electronic device including the foldable assembly.

### BACKGROUND

With the advancement in science and technology, an era of large-screen smart electronic devices is coming. To resolve a problem that a conventional large-screen bar-type device is large in size and is inconvenient to carry, a foldable electronic device emerges.

When a user requires large-screen display, the electronic device may be unfolded to provide a large-screen picture for the user, to meet a large-screen display requirement of the user. When the user needs to carry the electronic device, the electronic device may be folded to reduce space required for storage, so that the user can conveniently carry the electronic device.

In the foldable electronic device, a foldable function of the electronic device is usually implemented by using a foldable assembly. A structure design of the foldable assembly and layout between structures directly affect a size of the foldable electronic device after being folded and mechanical stability and reliability of the foldable assembly. In the current foldable electronic device, there is a wide variety of structures inside the foldable assembly, resulting in a complex structure and relatively high costs of the foldable assembly.

EP 4 072 110 A1 discloses an electronic device, including a screen and a housing apparatus configured to bear the screen. The housing apparatus can automatically perform avoidance in a folding process to form screen accommodation space. A folding action performed by the housing apparatus on the screen is stable, and has small squeezing force.
EP 2 546 721 A2 discloses a display system comprises a continuous flexible display and two main display supports being hingeable with respect to each other between a closed storage position and a planar configuration for fixing the flexible display in an open position. At least one additional display support supports a segment of the flexible display located between the said respective portions of the flexible display in the open position. This additional display support is movable with respect to the display segment between a non-operational position and a support position when the two main display supports are moved between the storage position and the planar position, such that in the open position substantially the whole surface of the display is supported by the respective display supports.

### SUMMARY

Embodiments of this application provide a foldable assembly and an electronic device, so as to resolve problems of a complex structure and relatively high costs of the foldable assembly.

To achieve the foregoing objective, the following technical solutions are used in this application:
According to a first aspect, a foldable assembly is provided. The foldable assembly is applied to an electronic device, and the electronic device includes a flexible screen. The foldable assembly includes a base, a swing arm mechanism, a door panel mechanism, and an elastic support member. The base extends in a first direction. The swing arm mechanism includes a first swing arm and a second swing arm. In a second direction, the first swing arm and the second swing arm are respectively located on two sides of the base and are hinged to the base. The first swing arm and the second swing arm rotate between a folded position and an unfolded position. The second direction intersects the first direction. The door panel mechanism is located on a side that is of the swing arm mechanism and that is close to the flexible screen. The door panel mechanism includes a first door panel and a second door panel. The first door panel is disposed on the first swing arm, and the second door panel is disposed on the second swing arm. The first door panel rotates together with the first swing arm, and the second door panel rotates together with the second swing arm. The elastic support member is located on a side that is of the door panel mechanism and that is close to the flexible screen. Two end portions of the elastic support member in the second direction are respectively connected to the first door panel and the second door panel. When the first swing arm and the second swing arm are at the unfolded position, the elastic support member is in a flat plate state and is configured to support the flexible screen; and when the first swing arm and the second swing arm are at the folded position, the elastic support member is bent to form avoidance space for accommodating a part of the flexible screen.

The first swing arm is separately connected to the first door panel and the base. In a process in which the first swing arm rotates relative to the base, the first door panel rotates with the first swing arm relative to the base. Similarly, the second swing arm is separately connected to the second door panel and the base. In a process in which the second swing arm rotates relative to the base, the second door panel rotates with the second swing arm relative to the base.

It should be noted that while the first swing arm and the first door panel rotate together, the first swing arm and the first door panel may also rotate relative to each other. Similarly, while the second swing arm and the second door panel rotate together, the second swing arm and the second door panel may also rotate relative to each other.

In a process in which the electronic device switches from an unfolded state to a folded state, end portions that are of the first door panel and the second door panel and that are away from the base approach each other, and end portions that are of the first door panel and the second door panel and that are close to the base move away from each other, so that the flexible screen is bent between the first door panel and the second door panel. Therefore, the first door panel, the base, and the second door panel form an approximately triangular accommodating cavity, and a bent part of the flexible screen is accommodated in the triangular accommodating cavity, and can be in a water drop-like shape. In this way, an inward folding angle of the bent part of the flexible screen can be increased, so that a service life of the flexible screen is prolonged. When the electronic device switches from the folded state to the unfolded state, the first door panel and the second door panel move away from each other until the first door panel, the base, and the second door panel are coplanar and have a same orientation, so that the flexible screen is unfolded, and the flexible screen is supported.

In the process in which the electronic device switches from the unfolded state to the folded state, the first door panel and the second door panel rotate toward each other, to drive the two end portions of the elastic support member in the second direction to rotate toward each other, thereby implementing folding of the elastic support member. When the electronic device is in the folded state, the elastic support member is bent away from the flexible screen to form the avoidance space for accommodating a part of the flexible screen. For example, the avoidance space may be in a water drop-like shape, and is configured to accommodate the bent part of the flexible screen in the folded state. The elastic support member surrounds the bent part of the flexible screen, to prevent another component from squeezing the bent part, so that the service life of the flexible screen is prolonged.

In a process in which the electronic device switches from the folded state to the unfolded state, the first door panel and the second door panel rotate away from each other, to drive the two end portions of the elastic support member in the second direction to rotate away from each other, thereby implementing unfolding of the elastic support member. When the electronic device is in the unfolded state, the elastic support member is unfolded into the flat plate state, and can be in direct contact with the bent part of the flexible screen to support the bent part. In this way, a structure of the foldable assembly can be simplified, to obtain a foldable assembly with a simple structure and low costs, thereby reducing costs of the electronic device.

In some embodiments of the first aspect, the elastic support member is provided with a plurality of openings running through the elastic support member.

There may be a plurality of openings, and the plurality of openings may be arranged in an array, or may be irregularly arranged. This is not limited herein.

The plurality of openings may be in a same shape or different shapes. For example, some openings are in a shape of a circle, some other openings are in a shape of an oval, some other openings are in a shape of a rectangle, and the like. In addition, opening areas of the plurality of openings may be equal or unequal. For example, opening areas of openings of different shapes are different. For another example, opening areas of openings of a same shape may also be different.

For example, the openings are strip-shaped, a length direction of the opening is parallel to the first direction, the plurality of strip-shaped openings are arranged in an array, and opening areas of the strip-shaped openings are equal.

In this embodiment, the elastic support member is provided with the openings, so that a bending stress exerted on the elastic support member when the elastic support member is bent as the door panel mechanism moves can be reduced, thereby conveniently bending the elastic support member.

In some embodiments of the first aspect, when both the first swing arm and the second swing arm are at the unfolded position, an orthographic projection of the elastic support member on the flexible screen covers an orthographic projection of the base on the flexible screen.

It may be understood that an area of the elastic support member is greater than an area of the base on a plane formed by the first direction and the second direction. In this way, the elastic support member is connected to the first door panel and the second door panel, so that the base can be separated from the flexible screen, and a support area of the elastic support member for the flexible screen can be increased, thereby improving a support effect on the flexible screen.

In some embodiments of the first aspect, the elastic support member is fixedly connected to the first door panel by using screws. An end portion of the elastic support member can be fastened to the first door panel by using the screws, so that fastening strength between the elastic support member and the first door panel is improved, thereby improving reliability of the elastic support member.

In some embodiments of the first aspect, the elastic support member is fixedly connected to the second door panel by using screws. An end portion of the elastic support member can be fastened to the second door panel by using the screws, so that fastening strength between the elastic support member and the second door panel is improved, thereby improving reliability of the elastic support member.

In some embodiments of the first aspect, the first swing arm includes a plurality of first primary swing arms and a plurality of first secondary swing arms. The plurality of first primary swing arms and the plurality of first secondary swing arms are alternately arranged in the first direction. In this way, force distribution of the first primary swing arm and the first secondary swing arm relative to the base can be optimized, so that stability of movement of a plurality of first swing arms is improved.

In some embodiments of the first aspect, the second swing arm includes a plurality of second primary swing arms and a plurality of second secondary swing arms, and the plurality of second primary swing arms and the plurality of second secondary swing arms are alternately arranged in the first direction. In this way, force distribution of the second primary swing arm and the second secondary swing arm relative to the base can be optimized, so that stability of movement of a plurality of second swing arms is improved.

In some embodiments of the first aspect, the first door panel includes a first door panel body and a first accessory that extends from the first door panel body toward a side close to the swing arm mechanism. The first accessory is provided with a first sliding groove. A first pin is disposed on the first secondary swing arm, and the first pin is inserted into the first sliding groove.

The first sliding groove includes a first end position and a second end position. In the process in which the electronic device switches from the unfolded state to the folded state, the first pin moves from the first end position of the first sliding groove to the second end position, so that an end portion that is of the first door panel and that is away from the base folds inward, and an end portion that is of the first door panel and that is close to the base unfolds outward. In the process in which the electronic device switches from the folded state to the unfolded state, the first pin moves from the second end position of the first sliding groove to the first end position, so that the end portion that is of the first door panel and that is away from the base unfolds outward, and the end portion that is of the first door panel and that is close to the base folds inward.

The first sliding groove can enable the first door panel to be slidably and rotatably connected relative to the first secondary swing arm, so that when the electronic device is in the folded state, the first door panel retracts inward to form an approximately triangular accommodating cavity, and when the electronic device is in the unfolded state, the first door panel unfolds outward to form a support surface used to support the flexible screen. The two end positions of the first sliding groove can limit sliding rotation of the first door panel, so that reliability of movement of the first door panel is improved.

In some embodiments of the first aspect, the second door panel includes a second door panel body and a second accessory that extends from the second door panel body toward a side close to the swing arm mechanism; the second accessory is provided with a second sliding groove; and a second pin is disposed on the second secondary swing arm, and the second pin is inserted into the second sliding groove.

The second sliding groove includes a first end position and a second end position. In the process in which the electronic device switches from the unfolded state to the folded state, the second pin moves from the first end position of the second sliding groove to the second end position, so that an end portion that is of the second door panel and that is away from the base folds inward, and an end portion that is of the second door panel and that is close to the base unfolds outward. In the process in which the electronic device switches from the folded state to the unfolded state, the second pin moves from the second end position of the second sliding groove to the first end position, so that the end portion that is of the second door panel and that is away from the base unfolds outward, and the end portion that is of the second door panel and that is close to the base folds inward.

The second sliding groove can enable the second door panel to be slidably and rotatably connected relative to the second secondary swing arm, so that when the electronic device is in the folded state, the second door panel retracts inward to form an approximately triangular accommodating cavity, and when the electronic device is in the unfolded state, the second door panel unfolds outward to form a support surface used to support the flexible screen. The two end positions of the second sliding groove can limit sliding rotation of the second door panel, so that reliability of movement of the second door panel is improved.

In some embodiments of the first aspect, the first sliding groove and the second sliding groove are arc-shaped grooves, and the arc-shaped groove protrudes away from the flexible screen.

In some embodiments of the first aspect, the foldable assembly further includes a damping mechanism. The damping mechanism is located on a side that is of the base and that is close to the flexible screen, and includes a damping spring and a follower connected to the damping spring. The first swing arm and/or the second swing arm include or includes a cam, and the cam fits with the follower to compress the damping spring when the swing arm mechanism rotates.

For example, a cam that is of the first secondary swing arm and that is hinged to the base has a convex surface, the follower has a concave surface, and the convex surface of the cam matches the concave surface of the follower.

When the first swing arm rotates relative to the base, and the second swing arm rotates relative to the base, the concave surface of the follower gradually switches from fitting with one of convex surfaces of the cam to fitting with another convex surface. In this process, pressure exerted on the damping spring first gradually increases, and then is gradually released. In addition, the follower experiences axial displacement as the pressure exerted on the damping spring changes. In this way, the foldable assembly conveniently switches between a folded state and an unfolded state. When there is no external force exerted by a user, a damping force can be provided for rotation of the first swing arm relative to the base and rotation of the second swing arm relative to the base by using an elastic force of the damping spring, so that the foldable assembly conveniently remains in the current folded state or the unfolded state.

In some embodiments of the first aspect, the foldable assembly further includes a synchronization mechanism. The synchronization mechanism includes a first internal gear, a second internal gear, a first external gear, and a second external gear. The first internal gear and the second internal gear are jointly located between the first external gear and the second external gear, the first internal gear meshes with the second internal gear, the first external gear meshes with the first internal gear, and the second external gear meshes with the second internal gear. The first external gear is fixedly connected to the first swing arm, and the second external gear is fixedly connected to the second swing arm.

For example, a size of the first internal gear is equal to a size of the second internal gear, a size of the first external gear is equal to a size of the second external gear, and the size of the first external gear is greater than the size of the first internal gear.

Because the first external gear, the first internal gear, the second internal gear, and the second external gear successively mesh with each other in the second direction, the first external gear and the second external gear have opposite rotation directions and equal angular velocities.

In some embodiments, the first external gear is fixedly connected to the first secondary swing arm, and the second external gear is fixedly connected to the second secondary swing arm. For example, a gear shaft of the first external gear and a cam of the first secondary swing arm are of an interconnected integral structure, and a gear shaft of the second external gear and a cam of the second secondary swing arm are of an interconnected integral structure. Therefore, the first external gear can synchronize an angular velocity with the first secondary swing arm, and the second external gear can synchronize an angular velocity with the second secondary swing arm.

It may be understood that the synchronization mechanism can enable the first swing arm and the second swing arm to synchronously rotate relative to the base, to improve synchronization performance of movement of the electronic device between the unfolded state and the folded state.

According to a second aspect, an electronic device is provided. The electronic device includes a flexible screen and any possible foldable assembly according to the first aspect. The foldable assembly in an unfolded state supports the flexible screen, and the foldable assembly in a folded state stores the flexible screen.

It may be understood that any electronic device provided above may be implemented by a corresponding foldable assembly provided above, or may be associated with the corresponding foldable assembly provided above. Therefore, for beneficial effects that can be achieved by the electronic device, reference may be made to the beneficial effects of the foldable assembly provided above, and details are not described herein again.

### BRIEF DESCRIPTION OF DRAWINGS

FIG. 1 is a schematic diagram of a structure of an electronic device according to some embodiments of this application;
FIG. 2 is a schematic diagram of a structure of the electronic device shown in FIG. 1 in an unfolded state;
FIG. 3 is a schematic diagram of a structure of the electronic device shown in FIG. 1 in a folded state;
FIG. 4 is a schematic diagram of a structure of a support apparatus in the electronic device shown in FIG. 1;
FIG. 5 is a cross-sectional view of an electronic device according to some embodiments of this application;
FIG. 6 is a schematic diagram of a structure of a foldable assembly in a fully unfolded state according to some embodiments of this application;
FIG. 7 is a partially enlarged schematic diagram of a foldable assembly according to some embodiments of this application;
FIG. 8 is a schematic diagram of a structure of the foldable assembly shown in FIG. 6 after a door panel mechanism is removed;
FIG. 9 is an enlarged view of a region T in FIG. 8;
FIG. 10 is a schematic diagram of a structure of a foldable assembly in a folded state according to some embodiments of this application;
FIG. 11 is a cross-sectional view formed along a line C-C shown in FIG. 10;
FIG. 12 is a cross-sectional view formed along a line D-D shown in FIG. 10;
FIG. 13 is a cross-sectional view formed along a line E-E shown in FIG. 6;
FIG. 14 is a schematic diagram of a structure of a damping mechanism and two secondary swing arms in a foldable assembly according to some embodiments of this application;
FIG. 15 is an enlarged view of a region H in FIG. 14;
FIG. 16 is a schematic diagram of a structure of a synchronization mechanism and two secondary swing arms in a foldable assembly according to some embodiments of this application; and
FIG. 17 is a cross-sectional view of a synchronization mechanism in a foldable assembly according to some embodiments of this application.

### DESCRIPTION OF EMBODIMENTS

To make the objectives, technical solutions, and advantages of this application clearer, the following further describes this application in detail with reference to the accompanying drawings.

The terms "first" and "second" below are merely intended for a purpose of description, and shall not be understood as an indication or implication of relative importance or implicit indication of a quantity of indicated technical features. Therefore, a feature defined by "first", "second", and the like may explicitly or implicitly include one or more such features. In the descriptions of this application, unless otherwise stated, "a plurality of" means two or more.

In addition, in this application, orientation terms such as "upper" and "lower" are defined relative to the orientations in which components in the accompanying drawings are schematically placed. It should be understood that these orientation terms are relative concepts, are used for relative description and clarification, and may be correspondingly changed based on changes in the orientations in which the components are placed in the accompanying drawings.

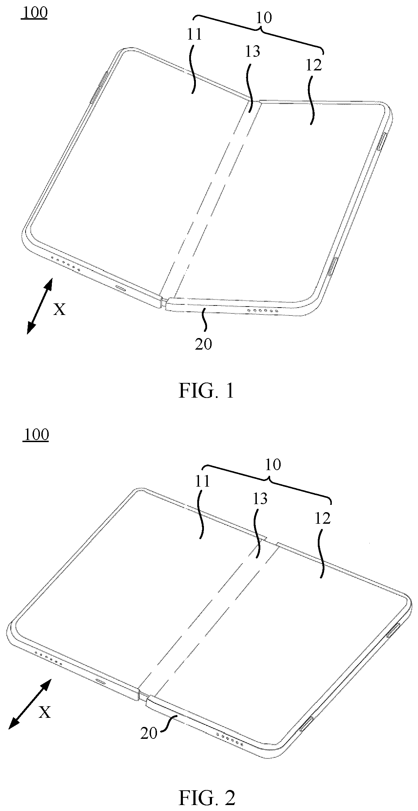

FIG. 1 is a schematic diagram of a structure of an electronic device according to some embodiments of this application.

As shown in FIG. 1, this application provides an electronic device 100. The electronic device is a foldable electronic device. The foldable electronic device may include any electronic device that has a flexible screen and that can change unfolded states or folded states of the flexible screen and the electronic device. For different usage requirements, the foldable electronic device may be unfolded into the unfolded state or folded into the folded state, or may be in an intermediate hovering state between the unfolded state and the folded state, in other words, the intermediate hovering state occurs on a switching path on which the electronic device switches between the folded state and the unfolded state. Therefore, the foldable electronic device has at least two states: the unfolded state and the folded state. In some cases, the foldable electronic device may further have a third state, namely, the intermediate hovering state between the unfolded state and the folded state. It may be understood that the intermediate hovering state is not merely a unique state, but may be any one or more states on the switching path of the electronic device between the unfolded state and the folded state.

As shown in FIG. 1, the electronic device 100 may include a flexible screen 10 and a support apparatus 20. It may be understood that FIG. 1 schematically shows only some components included in the electronic device 100, and actual shapes, actual sizes, actual positions, and actual composition of these components are not limited by FIG. 2.

The flexible screen 10 can be configured to display information and provide an interaction interface for a user. In the embodiments of this application, the flexible screen 10 may include but is not limited to an organic light-emitting diode (organic light-emitting diode, OLED) display, an active-matrix organic light emitting diode or an active-matrix organic light emitting diode (active-matrix organic light-emitting diode, AMOLED) display, a mini organic light-emitting diode (mini organic light-emitting diode) display, a micro light-emitting diode (micro organic light-emitting diode) display, a micro organic light-emitting diode (micro organic light-emitting diode) display, a quantum dot light-emitting diode (quantum dot light emitting diodes, QLED) display, or the like.

The flexible screen 10 can switch between the unfolded state and the folded state. The flexible screen 10 includes a first part 11, a second part 12, and a third part 13, and the third part 13 is located between the first part 11 and the second part 12. At least the third part 13 of the flexible screen 10 is made of a flexible material. It may be understood that the third part 13 is a bent part of the flexible screen 10, and is made of a flexible material, and the first part 11 and the second part 12 may be made of a flexible material, or may be made of a rigid material, or may be partially made of a rigid material and partially made of a flexible material. This is not limited herein.

Referring to FIG. 2, FIG. 2 is a three-dimensional view of the electronic device 100 in the unfolded state according to an embodiment of this application. When the flexible screen 10 is in the unfolded state, the first part 11, the second part 12, and the third part 13 are coplanarly disposed and have a same orientation. In this state, large-screen display can be implemented, to provide richer information for the user and bring better user experience to the user.

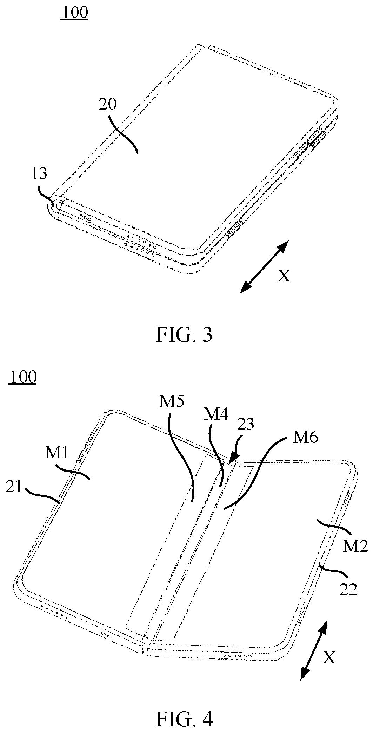

Referring to FIG. 3, FIG. 3 is a three-dimensional view of the electronic device 100 in the folded state according to an embodiment of this application. When the flexible screen 10 is in the folded state, the third part 13 is in a bent state, and the first part 11 (not shown in FIG. 3) is opposite to the second part 12 (not shown in FIG. 3). In this state, the flexible screen 10 is invisible to the user, and the support apparatus 20 is located outside the flexible screen 10 for protection, to prevent the flexible screen 10 from being scratched by a hard object. In addition, in this state, a volume of the foldable electronic device 100 can be reduced to conveniently store the foldable electronic device 100.

The support apparatus 20 is configured to support the flexible screen 10 and allow the flexible screen 10 to switch between the unfolded state and the folded state. Referring to FIG. 4, FIG. 4 is a three-dimensional view of the support apparatus 20 in the electronic device 100 shown in FIG. 1-FIG. 3. In this embodiment, the support apparatus 20 includes a first housing 21, a second housing 22, and a foldable assembly 23. It may be understood that FIG. 4 schematically shows only some components included in the support apparatus 20, and actual shapes, actual sizes, actual positions, and actual composition of these components are not limited by FIG. 4.

The support apparatus 20 has a support surface. The support surface may be configured to support the flexible screen 10. With the support of the support surface, in the unfolded state, the flexible screen 10 can be in a shape of a flat plate, and a display surface of the flexible screen 10 can be a plane.

The first housing 21 is configured to fasten and support the first part 11 of the flexible screen 10 in FIG. 1. Specifically, the first housing 21 has a support surface M1, and the first housing 21 fastens and supports the first part 11 of the flexible screen 10 in FIG. 1 by using the support surface M1. For example, a connection relationship between the support surface M1 and the first part 11 includes but is not limited to gluing.

The second housing 22 is configured to fasten and support the second part 12 of the flexible screen 10 in FIG. 1. Specifically, the second housing 22 has a support surface M2, and the second housing 22 fastens and supports the second part 12 of the flexible screen 10 in FIG. 1 by using the support surface M2. For example, a connection relationship between the support surface M2 and the second part 11 includes but is not limited to gluing.

The first housing 21 and/or the second housing 22 may respectively form installation space for installing electronic components such as a circuit board, a battery, a receiver, a speaker, and a camera of the electronic device 100. The circuit board may integrate electronic components such as a main controller, a storage unit, an antenna module, and a power management module of the electronic device 100. The battery may supply power to electronic components such as the flexible screen 10, the circuit board, the receiver, the speaker, and the camera. The first housing 21 and the second housing 22 may have equal thicknesses, or may have unequal thicknesses. This is not limited in this embodiment of this application.

In some embodiments, both the first housing 21 and the second housing 22 may be provided with installation space, to distribute the electronic components of the electronic device 100 in the housings on the two sides. In some other embodiments, only the first housing 21 may be provided with installation space, to distribute the electronic components of the electronic device 100 in the first housing 21 together. Alternatively, both the first housing 21 and the second housing 22 may be provided with installation space. However, a majority of the components of the electronic device 100 are disposed in the second housing 22, and a minority of the components are disposed in the first housing 21, so that the first housing 21 is lighter, thereby move conveniently performing folding and unfolding.

The first housing 21 may be of an integral structure, or may be formed by assembling a plurality of parts. Similarly, the second housing 22 may be an integral structural member, or may be formed by assembling a plurality of parts.

The foldable assembly 23 is configured to support the third part 13 of the flexible screen 10. For example, the foldable assembly 23 is located between the first housing 21 and the second housing 22, the foldable assembly 23 is separately connected to the first housing 21 and the second housing 22, and the first housing 21 and the second housing 22 are rotatably connected to each other by using the foldable assembly 23, to implement relative rotation between the first housing 21 and the second housing 22. Specifically, as shown in FIG. 4, a rotation axis of rotation of the first housing 21 relative to the second housing 22 extends in a first direction X.

The foldable assembly 23 may switch between an unfolded state and a folded state. The foldable assembly 23 switches between the unfolded state and the folded state, to allow the entire electronic device 100 and/or the flexible screen 10 to switch between the unfolded state and the folded state.

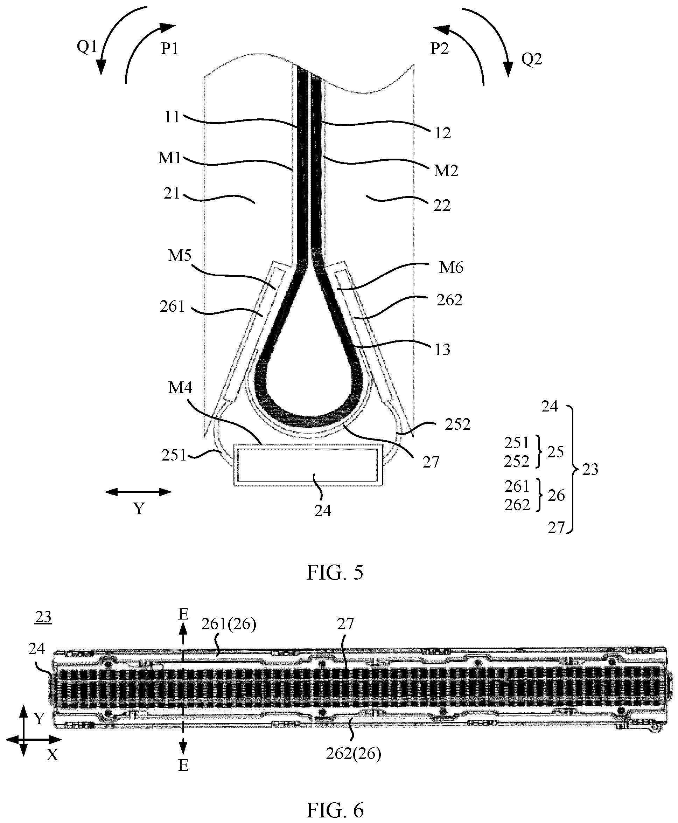

Specifically, referring to FIG. 5, FIG. 5 is a partial side view of the support apparatus 20 shown in FIG. 3 and FIG. 4. In a process of switching from the unfolded state to the folded state, the foldable assembly 23 can drive the first housing 21 and the second housing 22 to rotate toward each other. In this process, a rotation direction (a direction indicated by an arrow P1 in FIG. 5) of the first housing 21 is opposite to a rotation direction (a direction indicated by an arrow P2 in FIG. 5) of the second housing 22. When the foldable assembly 23 switches to the folded state, the first housing 21 and the second housing 22 face each other, and the support surface M1 of the first housing 21 and the support surface M2 of the second housing 22 face each other. In this case, there may be a slight included angle between the support surface M1 of the first housing 21 and the support surface M2 of the second housing 22, or the support surface M1 of the first housing 21 and the support surface M2 of the second housing 22 may be parallel to each other, so that the two housings can be completely closed. In this way, folding of the first housing 21 and the second housing 22 is implemented, so that the first part 11 and the second part 12 of the flexible screen 10 can be disposed opposite to each other, and the entire electronic device 100 is switched to the folded state. In a process of switching from the folded state to the unfolded state, the foldable assembly 23 can drive the first housing 21 and the second housing 22 to rotate away from each other. In this process, a rotation direction (a direction indicated by an arrow Q1 in FIG. 5) of the first housing 21 is opposite to a rotation direction (a direction indicated by an arrow Q2 in FIG. 5) of the second housing 22. When the foldable assembly 23 switches to the unfolded state, the support surface M1 of the first housing 21 and the support surface M2 of the second housing 22 are coplanar and have a same orientation. In this way, unfolding of the first housing 21 and the second housing 22 is implemented, so that the first part 11 and the second part 12 of the flexible screen 10 are coplanar and have a same orientation, and the entire electronic device 100 is switched to the unfolded state.

That the support surface M1 of the first housing 21 and the support surface M2 of the second housing 22 are coplanar and have a same orientation means that there may be 180° between the support surface M1 of the first housing 21 and the support surface M2 of the second housing 22. Certainly, a tolerance of a specific angle, for example, a tolerance within ±10°, is also allowed. In other words, an included angle between the support surface M1 of the first housing 21 and the support surface M2 of the second housing 22 ranges from 170° to 190°.

Continuing referring to FIG. 4 and FIG. 5, the foldable assembly 23 may include a base 24, a swing arm mechanism 25, a door panel mechanism 26, and an elastic support member 27. FIG. 5 schematically shows only some components included in the foldable assembly 23, and actual shapes, actual sizes, actual positions, and actual composition of these components are not limited by FIG. 5. The first direction X is a direction perpendicular to a paper plane of FIG. 5, and the second direction Y is a direction of a cross section.

The base 24 has a support surface M4. In the unfolded state, the support surface M4 of the base 24 is configured to support the third part 13 of the flexible screen 10, to ensure flatness of the flexible screen 10 in the unfolded state. In the folded state, the third part 13 of the flexible screen 10 is bent, and a specific gap is maintained between the third part 13 and the base 24, to avoid damage caused by the following case: The flexible screen 10 is bent and deformed, and the flexible screen 10 and the base 24 squeeze each other.

Specifically, in the folded state of the electronic device 100, the support surface M4 of the base 24 is perpendicular to the support surface M1 of the first housing 21 (however, in an actual scenario, a tolerance of a specific angle is also allowed, for example, an included angle between the support surface M1 of the first housing 21 and the support surface M4 of the base 24 ranges from 80° to 100°). The support surface M4 of the base 24 is perpendicular to the support surface M2 of the second housing 22 (however, in an actual scenario, a tolerance of a specific angle is also allowed, for example, an included angle between the support surface M2 of the second housing 22 and the support surface M4 of the base 24 ranges from 80° to 100°).

The base 24 extends in the first direction X. In other words, a length direction of the base 24 is the first direction X. In this way, the length direction of the base 24 is consistent with a length direction of the electronic device 100 in the folded state, which helps increase a length of the support surface M4 of the base 24, thereby increasing an area of the support surface M4. Therefore, the support surface M4 can conveniently reliably support the third part 13 of the flexible screen 10.

To make an inward folding angle of the flexible screen 10 as small as possible when the electronic device 100 is in the folded state, the flexible screen 10 is folded into a shape of a water drop. In this way, an inward folding angle of the third part 13 is increased, so that a service life of the flexible screen 10 can be prolonged.

The door panel mechanism 26 includes a first door panel 261 and a second door panel 262. The first door panel 261 and the second door panel 262 are arranged on two opposite sides of the base 24 in the second direction Y (perpendicular to the first direction X). The first door panel 261 and the second door panel 262 are separately formed in a shape of a flat plate.

Specifically, the first door panel 261 has a support surface M5, and the second door panel 262 has a support surface M6. Both the support surface M5 and the support surface M6 are closely fitted with the third part 13 of the flexible screen 10, to support the third part 13 of the flexible screen 10. The support surface M5 is located between the support surface M4 and the support surface M1 (with reference to FIG. 4), and the support surface M6 is located between the support surface M4 and the support surface M2 (with reference to FIG. 4). In addition, the swing arm mechanism 25 can allow the first door panel 261 to rotate relative to the base 24 and the second door panel 262 to rotate relative to the base 24.

In a process in which the electronic device 100 switches from the unfolded state to the folded state, as shown in FIG. 5, the first door panel 261 rotates relative to the base 24 in the rotation direction P1, and the second door panel 262 rotates relative to the base 24 in the direction P2 opposite to the direction P1. In other words, end portions that are of the first door panel 261 and the second door panel 262 and that are away from the base 24 approach each other, and end portions that are of the first door panel 261 and the second door panel 262 and that are close to the base 24 move away from each other, so that the flexible screen 10 is bent between the first door panel 261 and the second door panel 262. Therefore, the first door panel 261, the base 24, and the second door panel 262 form an approximately triangular accommodating cavity, and the third part 13 of the flexible screen 10 is accommodated in the triangular accommodating cavity, and can be in a water drop-like shape. In this way, the inward folding angle of the third part 13 can be increased, so that the service life of the flexible screen 10 is prolonged.

Conversely, when the electronic device 100 switches from the folded state to the unfolded state, the first door panel 261 rotates relative to the base 24 in a direction (the direction indicated by Q1 in FIG. 5) opposite to the rotation direction P1, and the second door panel 262 rotates relative to the base 24 in a direction (the direction indicated by Q2 in FIG. 5) opposite to the direction P2. In other words, the first door panel 261 and the second door panel 262 move away from each other until the support surface M5 of the first door panel 261, the support surface M4 of the base 24, and the support surface M6 of the second door panel 262 are coplanar and have a same orientation, so that the flexible screen 10 is unfolded, and the flexible screen 10 is supported.

It may be understood that, that the support surface M5 of the first door panel 261, the support surface M4 of the base 24, and the support surface M6 of the second door panel 262 are coplanar means that an included angle between any two of the support surface M5 of the first door panel 261, the support surface M4 of the base 24, and the support surface M6 of the second door panel 262 is 180°. Certainly, in an actual scenario, a specific error is also allowed. For example, the included angle between any two of the support surface M5 of the first door panel 261, the support surface M4 of the base 24, and the support surface M6 of the second door panel 262 ranges from 170° to 190°.

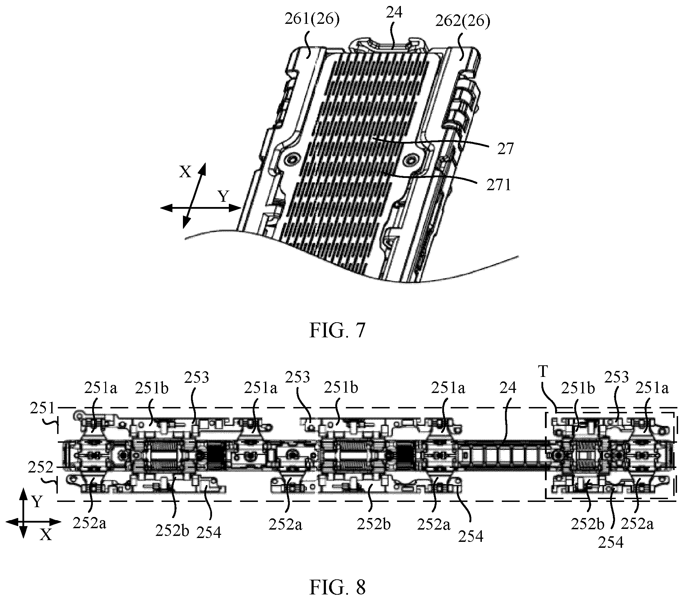

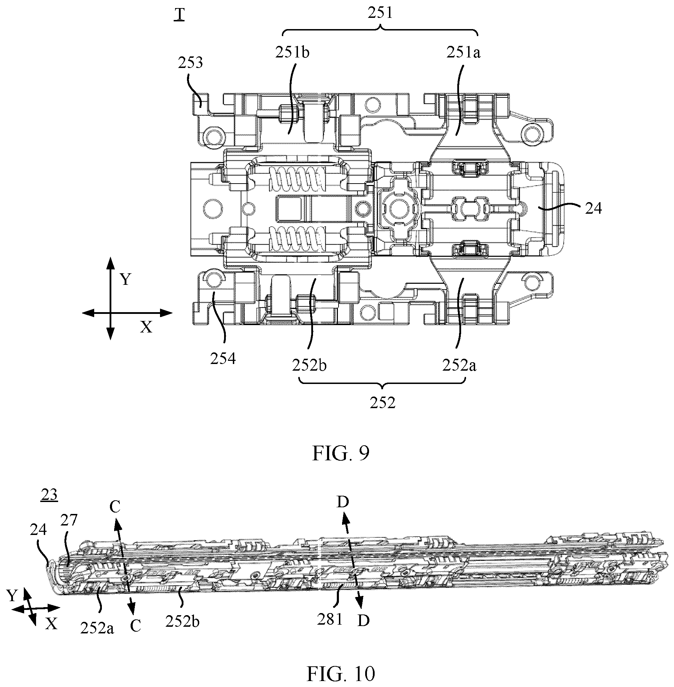

To implement folding and unfolding of the electronic device 100, reference is made to FIG. 6 to FIG. 9. FIG. 6 is a top view of the foldable assembly 23 shown in FIG. 4 and FIG. 5, where the foldable assembly 23 is in the unfolded state; FIG. 7 is a partially enlarged three-dimensional view of the foldable assembly 23 shown in FIG. 6, where the foldable assembly 23 is in the unfolded state; FIG. 8 is a schematic diagram of a structure of the foldable assembly shown in FIG. 6 after the door panel mechanism is removed; and FIG. 9 is an enlarged schematic diagram of a region T in FIG. 8. Specifically, the swing arm mechanism 25 includes a first swing arm 251 and a second swing arm 252. The first swing arm 251 and the second swing arm 252 are respectively disposed on the two sides of the base 24 in the second direction Y. It may be understood that FIG. 6 to FIG. 9 schematically show only some components included in the swing arm mechanism 25, and actual shapes, actual sizes, actual positions, and actual composition of these components are not limited by FIG. 6-FIG. 9.

The first swing arm 251 and the first housing 21 are located on a same side of the base 24. The first swing arm 251 is separately connected to the base 24 and the first housing 21, and is configured to drive the first housing 21 to rotate relative to the base 24 in the direction indicated by P1 or Q1. For example, the first swing arm 251 is fixedly connected to the first housing 21, and the first swing arm 251 is hinged to the base 24. In other words, an end of the first swing arm 251 is hinged to one side of the base 24. A hinge axis of the first swing arm 251 relative to the base 24 extends in the first direction X.

The first door panel 261 is disposed on the first swing arm 251, and the first swing arm 251 is separately connected to the first door panel 261 and the base 24. In a process in which the first swing arm 251 rotates relative to the base 24, the first door panel 261 rotates with the first swing arm 251 relative to the base 24. It should be noted that while the first swing arm 251 and the first door panel 261 rotate together, the first swing arm 251 and the first door panel 261 may also rotate relative to each other.

There may be a plurality of first swing arms 251. The plurality of first swing arms 251 may include at least one first primary swing arm 251a and at least one first secondary swing arm 251b. For example, a plurality of first primary swing arms 251a and a plurality of first secondary swing arms 251b may be alternately arranged in the first direction X. In this way, force distribution of the first primary swing arm 251a and the first secondary swing arm 251b relative to the base 24 can be optimized, so that stability of movement of the plurality of first swing arms 251 is improved.

In some examples, the first primary swing arm 251a may be fixedly connected to the first housing 21, and the first secondary swing arm 251b may not be connected to the first housing 21. In some other examples, alternatively, the first primary swing arm 251a may not be connected to the first housing 21, and the first secondary swing arm 251b may be fixedly connected to the first housing 21. In another example, alternatively, the first primary swing arm 251a may be fixedly connected to the first housing 21, and the first secondary swing arm 251b may also be fixedly connected to the first housing 21. This is not limited herein.

Similarly, the second swing arm 252 and the second housing 22 are located on a same side of the base 24. The second swing arm 252 is separately connected to the base 24 and the second housing 22, and is configured to drive the second housing 22 to rotate relative to the base 24 in the direction indicated by P2 or Q2. For example, the second swing arm 252 is fixedly connected to the second housing 22, and the second swing arm 252 is hinged to the base 24. In other words, an end of the second swing arm 252 is hinged to the other side of the base 24. A hinge axis of the second swing arm 252 relative to the base 24 extends in the first direction X.

The second door panel 262 is disposed on the second swing arm 252, and the second swing arm 252 is separately connected to the second door panel 262 and the base 24. In a process in which the second swing arm 252 rotates relative to the base 24, the second door panel 262 rotates with the second swing arm 252 relative to the base 24. It should be noted that while the second swing arm 252 and the second door panel 262 rotate together, the second swing arm 252 and the second door panel 262 may also rotate relative to each other.

There may be a plurality of second swing arms 252. The plurality of second swing arms 252 may include at least one second primary swing arm 252a and at least one second secondary swing arm 252b. For example, a plurality of second primary swing arms 252a and a plurality of second secondary swing arms 252b may be alternately arranged in the first direction X. In this way, force distribution of the second primary swing arm 252a and the second secondary swing arm 252b relative to the base 24 can be optimized, so that stability of movement of the plurality of second swing arms 252 is improved.

In some examples, the second primary swing arm 252a may be fixedly connected to the second housing 22, and the second secondary swing arm 252b may not be connected to the second housing 22. In some other examples, alternatively, the second primary swing arm 252a may not be connected to the second housing 22, and the second secondary swing arm 252b may be fixedly connected to the second housing 22. In another example, alternatively, the second primary swing arm 252a may be fixedly connected to the second housing 22, and the second secondary swing arm 252b may also be fixedly connected to the second housing 22. This is not limited herein.

A quantity of first primary swing arms 251a may be equal to a quantity of second primary swing arms 252a. In some examples, the plurality of first primary swing arms 251a and the plurality of second primary swing arms 252a may be symmetrical to each other with respect to the base 24 extending in the first direction X. Similarly, a quantity of first secondary swing arms 251b may be equal to a quantity of second secondary swing arms 252b. In some examples, the plurality of first secondary swing arms 251b and the plurality of second secondary swing arms 252b may be symmetrical to each other with respect to the base 24 extending in the first direction X.

As shown in FIG. 8 and FIG. 9, the swing arm mechanism 25 may further include a first connecting block 253 and a second connecting block 254. The first connecting block 253 is located on a same side of the base 24 as the first housing 21 and the first swing arm 251, and the second connecting block 254 is located on a same side of the base 24 as the second housing 22 and the second swing arm 252.

Each first connecting block 253 is configured to connect the at least one first primary swing arm 251a and the at least one first secondary swing arm 251b, so that a first primary swing arm 251a and a first secondary swing arm 251b that are connected to a same first connecting block 253 synchronously rotate relative to the base 24, thereby improving synchronization performance of rotation of the plurality of first swing arms 251. There may be one or more first connecting blocks 253. When there is one first connecting block 253, the plurality of first primary swing arms 251a and the plurality of first secondary swing arms 251b are connected to the same first connecting block 253. When there are a plurality of first connecting blocks 253, different first connecting blocks 253 may connect different first primary swing arms 251a and first secondary swing arms 251b.

Similarly, each second connecting block 254 is configured to connect the at least one second primary swing arm 252a and the at least one second secondary swing arm 252b, so that a second primary swing arm 252a and a second secondary swing arm 252b that are connected to a same second connecting block 254 synchronously rotate relative to the base 24, thereby improving synchronization performance of rotation of the plurality of second swing arms 252. There may be one or more second connecting blocks 254. When there is one second connecting block 254, the plurality of second primary swing arms 252a and the plurality of second secondary swing arms 252b are connected to the same second connecting block 254. When there are a plurality of second connecting blocks 254, different second connecting blocks 254 may connect different second primary swing arms 252a and second secondary swing arms 252b.

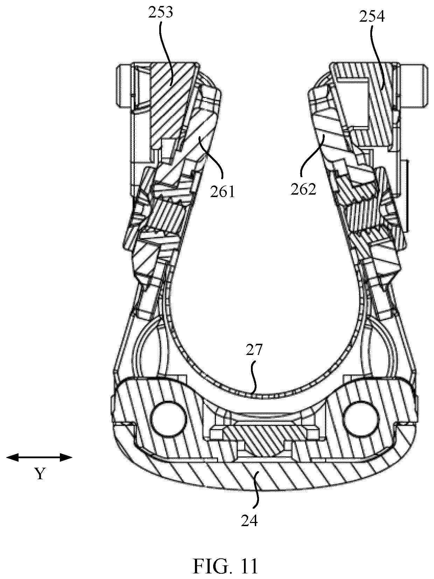

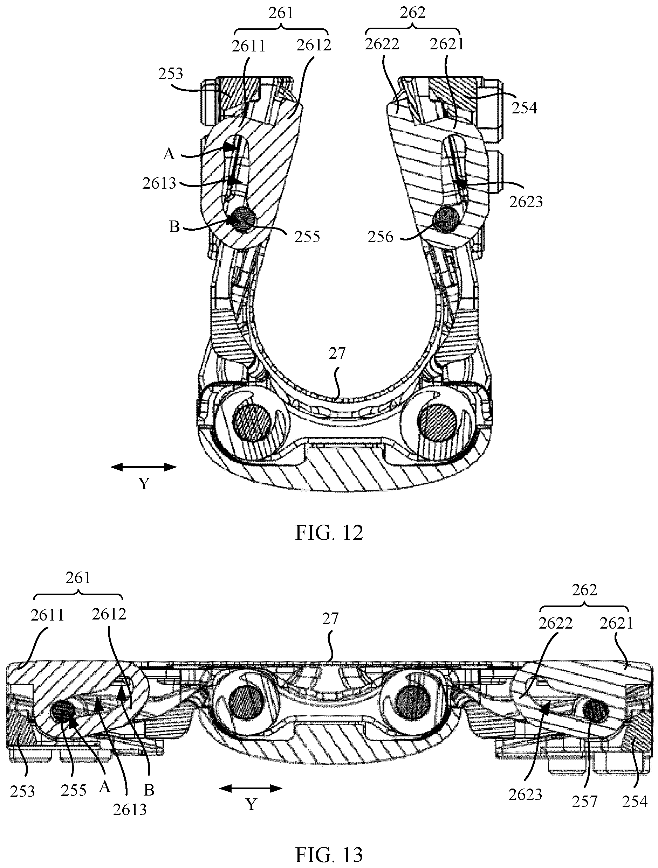

Referring to FIG. 10 to FIG. 12, FIG. 10 is a schematic diagram of a three-dimensional structure of the foldable assembly 23 shown in FIG. 4 and FIG. 5, where the foldable assembly 23 is in the folded state; FIG. 11 is a cross-sectional view formed along a line C-C in FIG. 10; FIG. 12 is a cross-sectional view formed along a line D-D in FIG. 10; and FIG. 13 is a cross-sectional view formed along a line E-E in FIG. 6.

The first connecting block 253 and the second connecting block 254 may be of wedge-shaped structures. In the process in which the electronic device 100 switches from the unfolded state to the folded state, the first connecting block 253 and the second connecting block 254 are disposed opposite to each other. Specifically, a wedge-shaped surface of the first connecting block 253 and a wedge-shaped surface of the second connecting block 254 are disposed opposite to each other, so that the wedge-shaped surface of the first connecting block 253, the base 24, and the wedge-shaped surface of the second connecting block 254 form an approximately triangular accommodating cavity, and the third part 13 of the flexible screen 10 is accommodated in the triangular accommodating cavity, and can be in a water drop-like shape. In this way, the inward folding angle of the third part 13 can be increased, so that the service life of the flexible screen 10 is prolonged.

In some embodiments, the first connecting block 253 may be connected to the first swing arm 251. The first connecting block 253 is rotatably connected to the first door panel 261. For example, the first connecting block 253 is connected to the first door panel 261 by using a rotating pair, where a common shaft of the rotating pair extends in the first direction X. In this way, the first door panel 261 can rotate relative to the first connecting block 253 and the first swing arm 251 by using the rotating pair.

Similarly, the second connecting block 254 may be connected to the second swing arm 252. The second connecting block 254 is rotatably connected to the second door panel 262. For example, the second connecting block 254 is connected to the second door panel 262 by using a rotating pair, where a common shaft of the rotating pair extends in the first direction X. In this way, the second door panel 262 can rotate relative to the second connecting block 254 and the second swing arm 252 by using the rotating pair.

The first connecting block 253 may be fixedly or movably connected to the first swing arm 251. The second connecting block 254 may be fixedly or movably connected to the second swing arm 252. This is not limited herein.

As shown in FIG. 12 and FIG. 13, the first door panel 261 includes a first door panel body 2611 and a first accessory 2612 that extends from the first door panel body 2611 toward a side close to the swing arm mechanism 25. The first accessory 2612 may be perpendicular to the first door panel body 2611 and disposed on a side close to the swing arm mechanism 25. The first accessory 2612 may be provided with a first sliding groove 2613, a first pin 255 may be disposed on the first secondary swing arm 251b, and the first pin 255 is inserted into the first sliding groove 2613, so that the first door panel 261 is slidably and rotatably connected to the first secondary swing arm 251b.

As shown in FIG. 12 and FIG. 13, the first sliding groove 2613 includes a first end position A and a second end position B. In the process in which the electronic device 100 switches from the unfolded state to the folded state, the first pin 255 moves from the first end position A of the first sliding groove 2613 to the second end position B, so that an end portion that is of the first door panel 261 and that is away from the base 24 moves in the direction indicated by P1, and an end portion that is of the first door panel 261 and that is close to the base 24 moves in the direction indicated by Q1. In the process in which the electronic device 100 switches from the folded state to the unfolded state, the first pin 255 moves from the second end position B of the first sliding groove 2613 to the first end position A, so that the end portion that is of the first door panel 261 and that is away from the base 24 moves in the direction indicated by Q1, and the end portion that is of the first door panel 261 and that is close to the base 24 moves in the direction indicated by P1.

The first sliding groove 2613 can enable the first door panel 261 to be slidably and rotatably connected relative to the first secondary swing arm 251b, so that when the electronic device 100 is in the folded state, the first door panel 261 retracts inward to form an approximately triangular accommodating cavity, and when the electronic device 100 is in the unfolded state, the first door panel 261 unfolds outward to form a support surface used to support the flexible screen 10. The two end positions of the first sliding groove 2613 can limit sliding rotation of the first door panel 261, so that reliability of movement of the first door panel 261 is improved.

As shown in FIG. 12 and FIG. 13, the second door panel 262 includes a second door panel body 2621 and a second accessory 2622 that extends from the second door panel body 2621 toward a side close to the swing arm mechanism 25. The second accessory 2622 may be perpendicular to the second door panel body 2621 and disposed on a side close to the swing arm mechanism 25. The second accessory 2622 may be provided with a second sliding groove 2623, a second pin 256 may be disposed on the second secondary swing arm 252b, and the second pin 256 is inserted into the second sliding groove 2623, so that the second door panel 262 is slidably and rotatably connected to the second secondary swing arm 252b.

As shown in FIG. 12 and FIG. 13, the second sliding groove 2623 includes a first end position A and a second end position B. In the process in which the electronic device 100 switches from the unfolded state to the folded state, the second pin 256 moves from the first end position A of the second sliding groove 2623 to the second end position B, so that an end portion that is of the second door panel 262 and that is away from the base 24 moves in the direction indicated by P2, and an end portion that is of the second door panel 262 and that is close to the base 24 moves in the direction indicated by Q2. In the process in which the electronic device 100 switches from the folded state to the unfolded state, the second pin 256 moves from the second end position B of the second sliding groove 2623 to the first end position A, so that the end portion that is of the second door panel 262 and that is away from the base 24 moves in the direction indicated by Q2, and the end portion that is of the second door panel 262 and that is close to the base 24 moves in the direction indicated by P2.

The second sliding groove 2623 can enable the second door panel 262 to be slidably and rotatably connected relative to the second secondary swing arm 252b, so that when the electronic device 100 is in the folded state, the second door panel 262 retracts inward to form an approximately triangular accommodating cavity, and when the electronic device 100 is in the unfolded state, the second door panel 262 unfolds outward to form a support surface used to support the flexible screen 10. The two end positions of the second sliding groove 2623 can limit sliding rotation of the second door panel 262, so that reliability of movement of the second door panel 262 is improved.

Both the first sliding groove 2613 and the second sliding groove 2623 are arc-shaped grooves, and the arc-shaped groove protrudes away from the flexible screen 10. In some other embodiments, the first pin 255 may alternatively be disposed on the first primary swing arm 251a, and the second pin 256 may alternatively be disposed on the second primary swing arm 252a. This is not limited herein.

In the process in which the electronic device 100 switches from the unfolded state to the folded state, the first door panel 261 and the second door panel 262 are disposed opposite to each other, the end portion that is of the first door panel 261 and that is away from the base 24 moves in the direction indicated by P1, and the end portion that is of the first door panel 261 and that is close to the base 24 moves in the direction indicated by Q1; and the end portion that is of the second door panel 262 and that is away from the base 24 moves in the direction indicated by P2, and the end portion that is of the second door panel 262 and that is close to the base 24 moves in the direction indicated by Q2. Therefore, the first door panel 261, the base 24, and the second door panel 262 form an approximately triangular accommodating cavity, and the third part 13 of the flexible screen 10 is accommodated in the triangular accommodating cavity, and can be in a water drop-like shape. In this way, the inward folding angle of the third part 13 can be increased, so that the service life of the flexible screen 10 is prolonged.

In the process in which the electronic device 100 switches from the folded state to the unfolded state, the end portion that is of the first door panel 261 and that is away from the base 24 moves in the direction indicated by Q1, and the end portion that is of the first door panel 261 and that is close to the base 24 moves in the direction indicated by P1; and the end portion that is of the second door panel 262 and that is away from the base 24 moves in the direction indicated by Q2, and the end portion that is of the second door panel 262 and that is close to the base 24 moves in the direction indicated by P2. In this way, the support surface M5 of the first door panel 261, the support surface M4 of the base 24, and the support surface M6 of the second door panel 262 are coplanar and have a same orientation, so that the flexible screen 10 is unfolded, and the flexible screen 10 is supported.

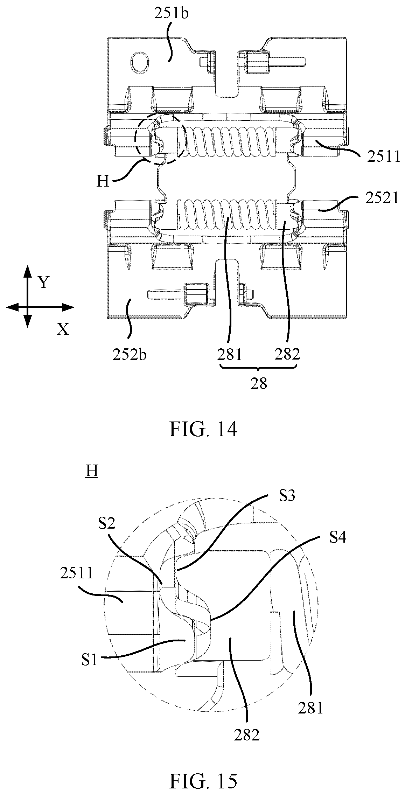

Referring to FIG. 14, FIG. 14 is a schematic diagram of a structure of a damping mechanism and two secondary swing arms in a foldable assembly. In some embodiments, the foldable assembly 23 further includes a damping mechanism 28. The damping mechanism 28 includes a damping spring 281 and a follower 282. For example, a cam 2511 that is of the first secondary swing arm 251b and that is hinged to the base 24 has a convex surface, the follower 282 has a concave surface, and the convex surface of the cam 2511 matches the concave surface of the follower 282.

With reference to FIG. 15, FIG. 15 is an enlarged view of a region H in FIG. 14. A surface that is of a first cam 2511 of the first secondary swing arm 251b and that faces a corresponding follower 282 has a convex surface S1 and a concave surface S2 recessed relative to the convex surface S1. A surface that is of a second cam 2521 of the second secondary swing arm 252b and that faces a corresponding follower 282 also has a convex surface S1 and a concave surface S2 recessed relative to the convex surface S1. Convex surfaces S1 and concave surfaces S2 of each cam are alternately arranged in a circumferential direction of the cam. A surface that is of each follower 282 and that faces a corresponding cam also has concave surfaces S4 and convex surfaces S3 alternately arranged in a circumferential direction of the follower 282. The follower 282 is preloaded between the damping spring 281 and the cam. In the folded state and the unfolded state, the convex surface S3 of the follower 282 matches different concave surfaces S2 of the cam, and similarly, the convex surface S1 of the cam matches different concave surfaces S4 of the follower 282.

When the user drives the first housing 21 and the second housing 22 to enable the first swing arm 251 to rotate relative to the base 24 and the second swing arm 252 to rotate relative to the base 24, the convex surface S3 of the follower 282 gradually switches from fitting with one of concave surfaces S2 of the cam to fitting with another concave surface S2. In this process, pressure exerted on the damping spring 281 first gradually increases, and then is gradually released. In addition, the follower 282 experiences axial displacement as the pressure exerted on the damping spring 281 changes. In this way, the foldable assembly 23 conveniently switches between the folded state and the unfolded state. When there is no external force exerted by the user, a damping force can be provided for rotation of the first swing arm 251 relative to the base 24 and rotation of the second swing arm 252 relative to the base 24 by using an elastic force of the damping spring 281, so that the foldable assembly 23 conveniently remains in the current folded state or the unfolded state.

In one damping mechanism 28, there may be two damping springs 281. One damping spring 281 is configured to generate a compressive elastic force to provide a damping force for the first secondary swing arm 251b, and the other damping spring 281 is configured to generate a compressive elastic force to provide a damping force for the second secondary swing arm 252b. Because the first swing arm 251 and the second swing arm 252 synchronously rotate, the two damping springs 281 jointly provide a damping force in a folding process of the electronic device 100.

In addition, in some examples, the damping mechanism 28 may further include two auxiliary springs, and the two auxiliary springs are located between the two damping springs 281, and are configured to perform compression in synchronization with the damping spring 281. Therefore, damping forces for the first swing arm 251 and the second swing arm 252 can be increased, so that stability of the electronic device 100 in the intermediate hovering state between the unfolded state and the folded state can be improved.

In some other embodiments, the cam fitting with the follower 282 is located on a hinge shaft that is of the primary swing arm and that is hinged to the base, in other words, the damping spring 281 is configured to generate a compressive elastic force to provide a damping force for the primary swing arm, so that a damping force in a folding process of the electronic device 100 is provided.

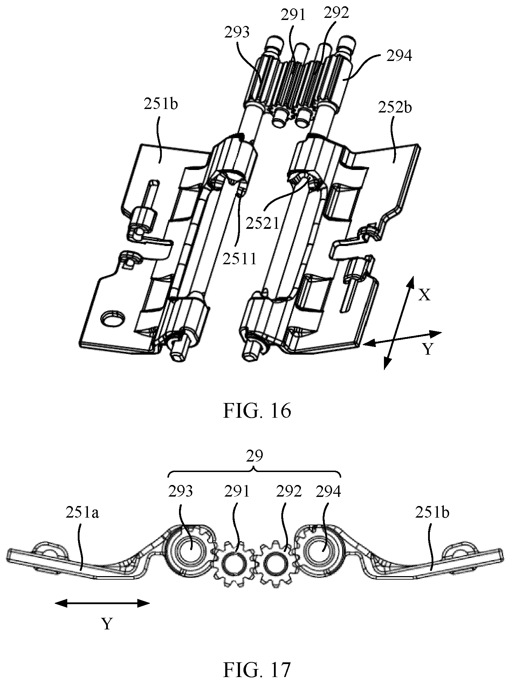

Referring to FIG. 16 and FIG. 17, FIG. 16 is a schematic diagram of a three-dimensional structure of a synchronization mechanism and two secondary swing arms in a foldable assembly; and FIG. 17 is a cross-sectional view of a synchronization mechanism in a foldable assembly. In some embodiments, the foldable assembly 23 further includes a synchronization mechanism 29. The synchronization mechanism 29 includes a first internal gear 291, a second internal gear 292, a first external gear 293, and a second external gear 294. The first internal gear 291 and the second internal gear 192 are jointly located between the first external gear 293 and the second external gear 294, the first internal gear 291 meshes with the second internal gear 292, the first external gear 293 meshes with the first internal gear 291, and the second external gear 294 meshes with the second internal gear 292.

For example, a size of the first internal gear 291 is equal to a size of the second internal gear 292, a size of the first external gear 293 is equal to a size of the second external gear 294, and the size of the first external gear 293 is greater than the size of the first internal gear 291.

Because the first external gear 293, the first internal gear 291, the second internal gear 292, and the second external gear 294 successively mesh with each other in the second direction Y, the first external gear 293 and the second external gear 294 have opposite rotation directions and equal angular velocities.

In some embodiments, the first external gear 293 is fixedly connected to the first secondary swing arm 251b, and the second external gear 294 is fixedly connected to the second secondary swing arm 252b. For example, as shown in FIG. 16, a gear shaft of the first external gear 293 and the cam 2511 of the first secondary swing arm 251b are of an interconnected integral structure, and a gear shaft of the second external gear 294 and a cam 2511 of the second secondary swing arm 252b are of an interconnected integral structure. Therefore, the first external gear 293 can synchronize an angular velocity with the first secondary swing arm 251b, and the second external gear 294 can synchronize an angular velocity with the second secondary swing arm 252b.

In the process in which the electronic device 100 switches from the unfolded state to the folded state, the first swing arm 251 moves in the direction indicated by P1, and the second swing arm 252 moves in the direction indicated by P2. In this process, an angle at which the first swing arm 251 fixedly connected to the synchronization mechanism 29 and the first external gear 293 rotates in the direction indicated by P1 is equal to an angle at which the second swing arm 252 fixedly connected to the second external gear 294 rotates in the direction indicated by P2. In the process in which the electronic device 100 switches from the folded state to the unfolded state, the first swing arm 251 moves in the direction indicated by Q11, and the second swing arm 252 moves in the direction indicated by Q2. In this process, an angle at which the first swing arm 251 fixedly connected to the synchronization mechanism 29 and the first external gear 293 rotates in the direction indicated by Q1 is equal to an angle at which the second swing arm 252 fixedly connected to the second external gear 294 rotates in the direction indicated by Q2.

In some other embodiments, alternatively, the first external gear 293 may not be fixedly connected to the first secondary swing arm 251b, but is fixedly connected to the first primary swing arm 251a; and alternatively, the second external gear 294 may not be fixedly connected to the second secondary swing arm 252b, but is fixedly connected to the second primary swing arm 252a.

It may be understood that the synchronization mechanism 29 can enable the first swing arm 251 and the second swing arm 252 to synchronously rotate relative to the base 24, so that synchronization performance of rotation of the first housing 21 and the second housing 22 can be improved, thereby improving synchronization performance of movement of the electronic device 100 between the unfolded state and the folded state.

In some embodiments, as shown in FIG. 5 to FIG. 7 and FIG. 10 to FIG. 13, the foldable assembly 23 further includes an elastic support member 27. The elastic support member 27 may be located on a side that is of the door panel mechanism 26 and that is close to the flexible screen 10. The elastic support member 27 may extend in the first direction X. It may be understood that a length direction of the elastic support member 27 is the first direction X, and a width direction of the elastic support member 27 is the second direction Y.

Two end portions of the elastic support member 27 in the second direction Y are connected to the door panel mechanism 26. For example, a first end portion of the elastic support member 27 in the second direction Y is connected to the first door panel 261, and a second end portion of the elastic support member 27 in the second direction Y is connected to the second door panel 262.

In some examples, as shown in FIG. 6 and FIG. 7, the first end portion of the elastic support member 27 in the second direction Y is fixedly connected to the first door panel 261 by using screws, and the second end portion of the elastic support member 27 in the second direction Y is fixedly connected to the second door panel 262 by using screws. In some other examples, the end portion of the elastic support member 27 may alternatively be fixedly connected to the door panel by using a latch. In another example, the end portion of the elastic support member 27 may alternatively be fixedly connected to the door panel in another manner. This is not limited herein.

The end portions of the elastic support member can be fastened to the first door panel 261 and the second door panel 262 by using screws, so that fastening strength between the end portions of the elastic support member and the door panels can be improved, thereby improving reliability of the elastic support member.

The elastic support member 27 can have rebound performance after being bent. In some examples, the elastic support member 27 may be of a stainless steel sheet structure. In this way, the elastic support member 27 in a flat plate state has better support performance, and the elastic support member 27 in a folded state has better bending performance.

As shown in FIG. 11 and FIG. 12, in the process in which the electronic device 100 switches from the unfolded state to the folded state, the first door panel 261 and the second door panel 262 rotate toward each other, to drive the two end portions of the elastic support member 27 in the second direction Y to rotate toward each other, thereby implementing folding of the elastic support member 27. When the electronic device 100 is in the folded state, the elastic support member 27 is bent away from the flexible screen 10 to form avoidance space for accommodating a part of the flexible screen. For example, the avoidance space may be in a water drop-like shape, and is configured to accommodate the third part 13 of the flexible screen 10 in the folded state. The elastic support member 27 surrounds the third part 13 of the flexible screen 10, to prevent another component from squeezing the third part 13, so that the service life of the flexible screen 10 is prolonged.

As shown in FIG. 13, in the process in which the electronic device 100 switches from the folded state to the unfolded state, the first door panel 261 and the second door panel 262 rotate away from each other, to drive the two end portions of the elastic support member 27 in the second direction Y to rotate away from each other, thereby implementing unfolding of the elastic support member 27. When the electronic device 100 is in the unfolded state, the elastic support member 27 is unfolded into the flat plate state, and can be in direct contact with the third part 13 of the flexible screen 10 to support the third part 13.

For example, when the elastic support member 27 is unfolded into the flat plate state, the flexible screen 10 is also in a planar state. In this case, an orthographic projection of the elastic support member 27 on the flexible screen 10 covers an orthographic projection of the base 24 on the flexible screen 10. It may be understood that an area of the elastic support member 27 is greater than an area of the base 24 on a plane formed by the first direction X and the second direction Y. In this way, the elastic support member 27 is connected to the first door panel 261 and the second door panel 262, so that the base 24 can be separated from the flexible screen 10, and a support area of the elastic support member 27 for the flexible screen 10 can be increased, thereby improving a support effect on the flexible screen 10.

In some embodiments, as shown in FIG. 7, the elastic support member 27 is provided with a plurality of openings 271 running through the elastic support member 27. There may be a plurality of openings 271, and the plurality of openings 271 may be arranged in an array, or may be irregularly arranged. This is not limited herein.

The plurality of openings 271 may be in a same shape or different shapes. For example, some openings 271 are in a shape of a circle, some other openings 271 are in a shape of an oval, some other openings 271 are in a shape of a rectangle, and the like. In addition, opening areas of the plurality of openings 271 may be equal or unequal. For example, opening areas of openings 271 of different shapes are different. For another example, opening areas of openings 271 of a same shape may also be different.

For example, the openings 271 are strip-shaped, a length direction of the opening 271 is parallel to the first direction X, the plurality of strip-shaped openings 271 are arranged in an array, and opening areas of the strip-shaped openings are equal.

In this embodiment, the elastic support member 27 is provided with the openings 271, so that a bending stress exerted on the elastic support member 27 when the elastic support member is bent as the door panel mechanism 26 moves can be reduced, thereby conveniently bending the elastic support member 27.

In conclusion, according to the foldable assembly 23 provided in this embodiment of this application, when the electronic device 100 is in the unfolded state, the elastic support member 27 is unfolded by using the door panel mechanism 26, to support the flexible screen 10; and when the electronic device 100 is in the folded state, the elastic support member 27 is bent by using the door panel mechanism 26, to form the avoidance space to accommodate the third part 13 of the flexible screen 10, thereby protecting the flexible screen. In this way, a structure of the foldable assembly 23 can be simplified, to obtain a foldable assembly 23 with a simple structure and low costs, thereby reducing costs of the electronic device 100.

The foregoing descriptions are merely specific implementations of this application, but are not intended to limit the protection scope of this application. The protection scope of this application shall be subject to the protection scope of the claims.

## Claims

1. A foldable assembly (23), applied to an electronic device (100), wherein the electronic device (100) comprises a flexible screen (10), and the foldable assembly (23) comprises:
a base (24), extending in a first direction;
a swing arm mechanism (25), comprising a first swing arm (251) and a second swing arm (252), wherein in a second direction, the first swing arm (251) and the second swing arm (252) are respectively located on two sides of the base (24) and are hinged to the base (24), and the first swing arm (251) and the second swing arm rotate between a folded position and an unfolded position; and the second direction intersects the first direction;
a door panel mechanism (26), being located on a side that is of the swing arm mechanism (25) and that is close to the flexible screen (10), and comprising a first door panel (261) and a second door panel (262), wherein the first door panel (261) is disposed on the first swing arm (251), and the second door panel (262) is disposed on the second swing arm (252); and the first door panel (261) rotates together with the first swing arm (251), and the second door panel (262) rotates together with the second swing arm (252); and
an elastic support member (27), located on a side that is of the door panel mechanism (26) and that is close to the flexible screen (10), **characterized in that** two end portions of the elastic support member (27) in the second direction are respectively connected to the first door panel (261) and the second door panel (262), wherein
when the first swing arm (251) and the second swing arm (252) are at the unfolded position, the elastic support member (27) is in a flat plate state and is configured to support the flexible screen (10); and when the first swing arm (251) and the second swing arm (252) are at the folded position, the elastic support member (27) is bent to form avoidance space for accommodating a part (11-13) of the flexible screen (10).

2. The foldable assembly (23) according to claim 1, wherein the elastic support member (27) is provided with a plurality of openings (271) running through the elastic support member (27).

3. The foldable assembly (23) according to claim 1 or 2, wherein when both the first swing arm (251) and the second swing arm (252) are at the unfolded position, an orthographic projection of the elastic support member (27) on the flexible screen (10) covers an orthographic projection of the base (24) on the flexible screen (10).

4. The foldable assembly (23) according to any one of claims 1-3, wherein the elastic support member (27) is fixedly connected to the first door panel (261) and/or the second door panel (262) by using screws.

5. The foldable assembly (23) according to any one of claims 1-4, wherein
the first swing arm (251) comprises a plurality of first primary swing arms (251a) and a plurality of first secondary swing arms (251b), and the plurality of first primary swing arms (251a) and the plurality of first secondary swing arms (251b) are alternately arranged in the first direction; and/or
the second swing arm (252) comprises a plurality of second primary swing arms (252a) and a plurality of second secondary swing arms (252b), and the plurality of second primary swing arms (252a) and the plurality of second secondary swing arms (252b) are alternately arranged in the first direction.

6. The foldable assembly (23) according to claim 5, wherein
the first door panel (261) comprises a first door panel body (2611) and a first accessory (2612) that extends from the first door panel body (2611) toward a side close to the swing arm mechanism (25); the first accessory (2612) is provided with a first sliding groove (2613); and a first pin (255) is disposed on the first secondary swing arm (251b), and the first pin (255) is inserted into the first sliding groove (2613); and/or
the second door panel (262) comprises a second door panel body (2621) and a second accessory (2622) that extends from the second door panel body (2621) toward a side close to the swing arm mechanism (25); the second accessory (2622) is provided with a second sliding groove (2623); and a second pin (256) is disposed on the second secondary swing arm (252b), and the second pin (256) is inserted into the second sliding groove (2623).

7. The foldable assembly (23) according to claim 6, wherein the first sliding groove (2613) and the second sliding groove (2623) are arc-shaped grooves, and the arc-shaped groove protrudes away from the flexible screen (10).

8. The foldable assembly (23) according to any one of claims 1-7, further comprising:
a damping mechanism (28), being located on a side that is of the base (24) and that is close to the flexible screen (10), and comprising a damping spring (281) and a follower (282) connected to the damping spring (281), wherein
the first swing arm (251) and/or the second swing arm (252) comprise or comprises a cam (2511, 2521), and the cam (2511, 2521) fits with the follower (282) to compress the damping spring (281) when the swing arm mechanism rotates.

9. The foldable assembly (23) according to any one of claims 1-8, further comprising:
a synchronization mechanism (29), comprising a first internal gear (291), a second internal gear (292), a first external gear (293), and a second external gear (294), wherein the first internal gear (291) and the second internal gear (292) are jointly located between the first external gear (293) and the second external gear (294), the first internal gear meshes with the second internal gear (292), the first external gear meshes with the first internal gear (291), and the second external gear meshes with the second internal gear (292), wherein
the first external gear (293) is fixedly connected to the first swing arm (251), and the second external gear (294) is fixedly connected to the second swing arm (252).

10. An electronic device (100), comprising a flexible screen (10) and the foldable assembly (23) according to any one of claims 1-9, wherein the foldable assembly (23) in an unfolded state supports the flexible screen (10), and the foldable assembly (23) in a folded state stores the flexible screen (10).

## Patentansprüche

1. Eine faltbare Baugruppe (23), anwendbar auf ein elektronisches Gerät (100), wobei das elektronische Gerät (100) einen flexiblen Bildschirm (10) umfasst, und die faltbare Baugruppe (23) folgende Komponenten umfasst:
eine Basis (24), die sich in einer ersten Richtung erstreckt;
einen Schwenkarm-Mechanismus (25), bestehend aus einem ersten Schwenkarm (251) und einem zweiten Schwenkarm (252), wobei sich in einer zweiten Richtung der erste Schwenkarm (251) und der zweite Schwenkarm (252) jeweils an zwei Seiten der Basis (24) befinden und an der Basis (24) angelenkt sind, und der erste Schwenkarm (251) und der zweite Schwenkarm sich zwischen einer gefalteten und einer entfalteten Position drehen; und die zweite Richtung steht mit der ersten Richtung im Winkel;
einen Türpaneel-Mechanismus (26), der sich an einer dem Schwenkarm-Mechanismus (25) zugewandten und dem flexiblen Bildschirm (10) nahen Seite befindet und ein erstes Türpaneel (261) und ein zweites Türpaneel (262) umfasst, wobei das erste Türpaneel (261) am ersten Schwenkarm (251) angebracht ist und das zweite Türpaneel (262) am zweiten Schwenkarm (252) angebracht ist; und das erste Türpaneel (261) dreht sich zusammen mit dem ersten Schwenkarm (251), und das zweite Türpaneel (262) dreht sich zusammen mit dem zweiten Schwenkarm (252); und
ein elastisches Stützelement (27), das sich an einer dem Türpaneel-Mechanismus (26) zugewandten und dem flexiblen Bildschirm (10) nahen Seite befindet, **dadurch gekennzeichnet, dass** zwei Endabschnitte des elastischen Stützelements (27) in der zweiten Richtung jeweils mit dem ersten Türpaneel (261) und dem zweiten Türpaneel (262) verbunden sind, wobei
wenn sich der erste Schwenkarm (251) und der zweite Schwenkarm (252) in der entfalteten Position befinden, das elastische Stützelement (27) in einem Flächenzustand ist und dazu dient, den flexiblen Bildschirm (10) zu stützen; und wenn sich der erste Schwenkarm (251) und der zweite Schwenkarm (252) in der gefalteten Position befinden, das elastische Stützelement (27) gebogen ist, um Freiraum zum Aufnehmen eines Teils (11-13) des flexiblen Bildschirms (10) zu bilden.

2. Die faltbare Baugruppe (23) nach Anspruch 1, wobei das elastische Stützelement (27) mit einer Vielzahl von Durchbrüchen (271) versehen ist, die durch das elastische Stützelement (27) hindurchführen.

3. Die faltbare Baugruppe (23) nach Anspruch 1 oder 2, wobei - wenn sich sowohl der erste Schwenkarm (251) als auch der zweite Schwenkarm (252) in der entfalteten Position befinden - eine orthogonale Projektion des elastischen Stützelements (27) auf den flexiblen Bildschirm (10) eine orthogonale Projektion der Basis (24) auf den flexiblen Bildschirm (10) abdeckt.

4. Die faltbare Baugruppe (23) nach einem der Ansprüche 1 bis 3, wobei das elastische Stützelement (27) mittels Schrauben fest mit dem ersten Türpaneel (261) und/oder dem zweiten Türpaneel (262) verbunden ist.

5. Die faltbare Baugruppe (23) nach einem der Ansprüche 1-4, wobei
der erste Schwenkarm (251) eine Vielzahl von ersten primären Schwenkarmen (251a) und eine Vielzahl von ersten sekundären Schwenkarmen (251b) umfasst, wobei die Vielzahl der ersten primären Schwenkarme (251a) und die Vielzahl der ersten sekundären Schwenkarme (251b) abwechselnd in der ersten Richtung angeordnet sind; und/oder
der zweite Schwenkarm (252) eine Vielzahl von zweiten primären Schwenkarmen (252a) und eine Vielzahl von zweiten sekundären Schwenkarmen (252b) umfasst, wobei die Vielzahl der zweiten primären Schwenkarme (252a) und die Vielzahl der zweiten sekundären Schwenkarme (252b) abwechselnd in der ersten Richtung angeordnet sind.

6. Die faltbare Baugruppe (23) nach Anspruch 5, wobei
das erste Türpaneel (261) einen ersten Türplattenkörper (2611) und ein erstes Zubehörteil (2612) umfasst, das sich von dem ersten Türplattenkörper (2611) zu einer dem Schwenkarmmechanismus (25) nahegelegenen Seite erstreckt; das erste Zubehörteil (2612) ist mit einer ersten Führungnut (2613) versehen; und an dem ersten sekundären Schwenkarm (251b) ist ein erster Stift (255) angeordnet, wobei der erste Stift (255) in die erste Führungnut (2613) eingesetzt ist; und/oder
das zweite Türpaneel (262) einen zweiten Türplattenkörper (2621) und ein zweites Zubehörteil (2622) umfasst, das sich von dem zweiten Türplattenkörper (2621) zu einer dem Schwenkarmmechanismus (25) nahegelegenen Seite erstreckt; das zweite Zubehörteil (2622) ist mit einer zweiten Führungnut (2623) versehen; und an dem zweiten sekundären Schwenkarm (252b) ist ein zweiter Stift (256) angeordnet, wobei der zweite Stift (256) in die zweite Führungnut (2623) eingesetzt ist.

7. Die faltbare Baugruppe (23) nach Anspruch 6, wobei die erste Führungnut (2613) und die zweite Führungnut (2623) bogenförmige Nuten sind und die bogenförmige Nut von dem flexiblen Bildschirm (10) absteht.

8. Die faltbare Baugruppe (23) nach einem der Ansprüche 1-7, weiterhin umfassend:
einen Dämpfungsmechanismus (28), der sich an einer dem Basisteil (24) zugewandten und dem flexiblen Bildschirm (10) nahegelegenen Seite befindet und eine Dämpfungsfeder (281) sowie einen mit der Dämpfungsfeder (281) verbundenen Mitnehmer (282) umfasst, wobei
der erste Schwenkarm (251) und/oder der zweite Schwenkarm (252) eine Nocke (2511, 2521) umfassen bzw. umfasst, wobei die Nocke (2511, 2521) mit dem Mitnehmer (282) zusammenwirkt, um die Dämpfungsfeder (281) beim Drehen des Schwenkarmmechanismus zu stauchen.

9. Die faltbare Baugruppe (23) nach einem der Ansprüche 1-8, weiterhin umfassend:
ein Synchronisationsmechanismus (29), umfassend ein erstes Innenzahnrad (291), ein zweites Innenzahnrad (292), ein erstes Außenzahnrad (293) und ein zweites Außenzahnrad (294), wobei das erste Innenzahnrad (291) und das zweite Innenzahnrad (292) gemeinsam zwischen dem ersten Außenzahnrad (293) und dem zweiten Außenzahnrad (294) angeordnet sind, das erste Innenzahnrad (291) mit dem zweiten Innenzahnrad (292) kämmt, das erste Außenzahnrad (293) mit dem ersten Innenzahnrad (291) kämmt und das zweite Außenzahnrad (294) mit dem zweiten Innenzahnrad (292) kämmt, wobei
das erste Außenzahnrad (293) fest mit dem ersten Schwenkarm (251) verbunden ist und das zweite Außenzahnrad (294) fest mit dem zweiten Schwenkarm (252) verbunden ist.

10. Elektronisches Gerät (100), umfassend einen flexiblen Bildschirm (10) und die zusammenklappbare Baugruppe (23) gemäß einem der Ansprüche 1 bis 9, wobei die zusammenklappbare Baugruppe (23) im ausgeklappten Zustand den flexiblen Bildschirm (10) trägt und die zusammenklappbare Baugruppe (23) im zusammengeklappten Zustand den flexiblen Bildschirm (10) aufnimmt.

## Revendications

1. Un ensemble pliable (23), appliqué à un dispositif électronique (100), dans lequel le dispositif électronique (100) comprend un écran flexible (10), et l'ensemble pliable (23) comprend :
une base (24), s'étendant dans une première direction ;
un mécanisme à bras oscillant (25), comprenant un premier bras oscillant (251) et un second bras oscillant (252), dans lequel, dans une seconde direction, le premier bras oscillant (251) et le second bras oscillant (252) sont respectivement situés de part et d'autre de la base (24) et sont articulés à la base (24), et le premier bras oscillant (251) et le second bras oscillant (252) pivotent entre une position repliée et une position dépliée ; la seconde direction croisant la première direction ;
un mécanisme de panneau de porte (26), situé sur un côté du mécanisme à bras oscillant (25) et près de l'écran flexible (10), comprenant un premier panneau de porte (261) et un second panneau de porte (262), dans lequel le premier panneau de porte (261) est disposé sur le premier bras oscillant (251), et le second panneau de porte (262) est disposé sur le second bras oscillant (252) ; le premier panneau de porte (261) pivote avec le premier bras oscillant (251), et le second panneau de porte (262) pivote avec le second bras oscillant (252) ; et
un élément de support élastique (27), situé sur un côté du mécanisme de panneau de porte (26) et proche de l'écran flexible (10), **caractérisé en ce que** les deux extrémités de l'élément de support élastique (27) dans la seconde direction sont respectivement reliées au premier panneau de porte (261) et au second panneau de porte (262), dans lequel
lorsque le premier bras oscillant (251) et le second bras oscillant (252) sont en position dépliée, l'élément de support élastique (27) est à l'état de plaque plate et est conçu pour supporter l'écran flexible (10) ; et lorsque le premier bras oscillant (251) et le second bras oscillant (252) sont en position repliée, l'élément de support élastique (27) est courbé pour former un espace d'évitement destiné à loger une partie (11-13) de l'écran flexible (10).

2. L'ensemble pliable (23) selon la revendication 1, dans lequel l'élément de support élastique (27) est muni d'une pluralité d'ouvertures (271) traversant l'élément de support élastique (27).

3. L'ensemble pliable (23) selon la revendication 1 ou 2, dans lequel, lorsque le premier bras oscillant (251) et le second bras oscillant (252) sont en position dépliée, la projection orthogonale de l'élément de support élastique (27) sur l'écran flexible (10) recouvre la projection orthogonale de la base (24) sur l'écran flexible (10).

4. L'ensemble pliable (23) selon l'une quelconque des revendications 1 à 3, dans lequel l'élément de support élastique (27) est fixé au premier panneau de porte (261) et/ou au second panneau de porte (262) à l'aide de vis.

5. L'ensemble pliable (23) selon l'une quelconque des revendications 1 à 4, dans lequel
le premier bras oscillant (251) comprend une pluralité de premiers bras oscillants principaux (251a) et une pluralité de premiers bras oscillants secondaires (251b), et lesdits premiers bras oscillants principaux (251a) et premiers bras oscillants secondaires (251b) sont disposés de façon alternée dans la première direction ; et/ou
le second bras oscillant (252) comprend une pluralité de deuxièmes bras oscillants principaux (252a) et une pluralité de deuxièmes bras oscillants secondaires (252b), et lesdits deuxièmes bras oscillants principaux (252a) et deuxièmes bras oscillants secondaires (252b) sont disposés de façon alternée dans la première direction.

6. L'ensemble pliable (23) selon la revendication 5, dans lequel
le premier panneau de porte (261) comprend un premier corps de panneau de porte (2611) et un premier accessoire (2612) qui s'étend depuis le premier corps de panneau de porte (2611) vers un côté proche du mécanisme de bras oscillant (25) ; le premier accessoire (2612) est pourvu d'une première rainure de coulissement (2613) ; et une première goupille (255) est disposée sur le premier bras oscillant secondaire (251b), la première goupille (255) étant insérée dans la première rainure de coulissement (2613) ; et/ou
le second panneau de porte (262) comprend un second corps de panneau de porte (2621) et un second accessoire (2622) qui s'étend depuis le second corps de panneau de porte (2621) vers un côté proche du mécanisme de bras oscillant (25) ; le second accessoire (2622) est pourvu d'une seconde rainure de coulissement (2623) ; et une seconde goupille (256) est disposée sur le second bras oscillant secondaire (252b), la seconde goupille (256) étant insérée dans la seconde rainure de coulissement (2623).

7. L'ensemble pliable (23) selon la revendication 6, dans lequel la première rainure de coulissement (2613) et la seconde rainure de coulissement (2623) sont des rainures en arc, et la rainure en arc fait saillie à l'opposé de l'écran flexible (10).

8. L'ensemble pliable (23) selon l'une quelconque des revendications 1 à 7, comprenant en outre :
un mécanisme d'amortissement (28) situé sur un côté de la base (24) proche de l'écran flexible (10), et comprenant un ressort d'amortissement (281) et un galet suiveur (282) relié au ressort d'amortissement (281), dans lequel
le premier bras oscillant (251) et/ou le second bras oscillant (252) comprend ou comprennent une came (2511, 2521), et la came (2511, 2521) coopère avec le galet suiveur (282) pour comprimer le ressort d'amortissement (281) lorsque le mécanisme de bras oscillant tourne.

9. L'ensemble pliable (23) selon l'une quelconque des revendications 1 à 8, comprenant en outre :
un mécanisme de synchronisation (29), comprenant une première roue dentée interne (291), une deuxième roue dentée interne (292), une première roue dentée externe (293) et une deuxième roue dentée externe (294), la première roue dentée interne (291) et la deuxième roue dentée interne (292) étant situées conjointement entre la première roue dentée externe (293) et la deuxième roue dentée externe (294), la première roue dentée interne étant engrenée avec la deuxième roue dentée interne (292), la première roue dentée externe étant engrenée avec la première roue dentée interne (291), et la deuxième roue dentée externe étant engrenée avec la deuxième roue dentée interne (292), dans lequel
la première roue dentée externe (293) est fixée de manière solidaire au premier bras oscillant (251), et la deuxième roue dentée externe (294) est fixée de manière solidaire au deuxième bras oscillant (252).

10. Un dispositif électronique (100), comprenant un écran flexible (10) et l'ensemble pliable (23) selon l'une quelconque des revendications 1 à 9, l'ensemble pliable (23) dans un état déplié supportant l'écran flexible (10), et l'ensemble pliable (23) dans un état plié stockant l'écran flexible (10).
